# EUROPÄISCHE PATENTSCHRIFT

(11) **EP 1 595 440 B1**
(45) Veröffentlichungstag und Bekanntmachung des Hinweises auf die Patenterteilung: **26.03.2008**
(21) Anmeldenummer: 05009889.6
(22) Anmeldetag: 06.05.2005
(51) Int. Cl.: A01F 15/07

(54) **Maschine zum Aufnehmen und Pressen von landwirtschaftlichem Erntegut**
Device for picking up and pressing of harvested agricultural crop
Dispositif pour ramasser et compacter des matières récoltées

(30) Priorität: 11.05.2004 DE 102004023698
(43) Veröffentlichungstag der Anmeldung: 16.11.2005
(73) Patentinhaber: Maschinenfabrik Bernard Krone GmbH, 48480 Spelle (DE)
(72) Erfinder: Krone, Bernard Dr.-Ing. E.h., 48480 Spelle (DE); Martensen, Klaus Dr.-Ing., 48477 Hörstel (DE); Hinsch, Werner Dipl.-Ing., 48480 Spelle (DE); Schulz, Stephan Dipl.-Ing., 48369 Saerbeck (DE)

(56) Entgegenhaltungen:
- EP-A- 0 875 136
- EP-A- 1 285 564
- DE-B- 1 276 960
- DE-C1- 4 012 738

## Beschreibung

Die Erfindung betrifft eine Maschine zum Aufnehmen und Pressen von landwirtschaftlichem Erntegut zu rollenförmigen Ballen gemäß dem Oberbegriff des Patentanspruchs 1.

In der DE 40 12 738 C1 ist beispielsweise eine Maschine zum Aufnehmen und Pressen von landwirtschaftlichem Erntegut beschrieben, die dergestalt ausgebildet ist, dass eine Wickelkammer zur Bildung von rollenförmigen Erntegutballen von einem flexiblen Ballenförderer gebildet ist, welcher von mehreren Spannzylindern mit einer Spannkraft beaufschlagt ist. Zur Versorgung mit einem Druckmittel sind diese Spannzylinder über aufwändige Versorgungsleitungen und diverse Druckventile mit dem Hydrauliksystem einer landwirtschaftlichen Zug- und Antriebsmaschine verbindbar. Dies führt zu einer großen Anzahl von Hydraulikleitungen, die aufgrund der geforderten kurzen Zeitintervalle zum Spannen des Ballenförderers nach dem Ballenauswurf mit einem großen Leitungsquerschnitt ausgestattet sind. Diese Vielzahl von Hydraulikleitungen, die zusätzlich häufig ohne besondere Abdeckungen an den Außenwänden oder auch innen an den Maschinen verlegt werden, bringen zum einen eine erhöhte Störanfälligkeit für Leckagen oder Ölverlust, sowie einen hohen Montageaufwand und damit auch Kostenaufwand mit sich. Ein weiterer Mangel dieser Lösung besteht in dem erhöhten Austausch des Druckmittels zwischen der Zug- und Antriebsmaschine und der Maschine zum Pressen von landwirtschaftlichem Erntegut, welcher zu einer nicht notwendigen Erwärmung des Druckmittels führt.

Es ist daher Aufgabe der vorliegenden Erfindung den baulichen Aufwand für die Herstellung einer gattungsgemäßen Maschine zu verringern bzw. eine gattungsgemäße Maschine zu verbessern.

Die Aufgabe wird durch eine gattungsgemäße Maschine gelöst, die sich dadurch auszeichnet, dass während des Betriebs eine erste Anzahl Zylinder eine Menge Fluid aufnimmt, die der von einer zweiten Anzahl der Zylinder abgegebenen Menge Fluid zumindest teilweise entspricht.

Abhängig von der Anordnung der Zylinder innerhalb eines Maschinenaggregates, können beispielsweise Zug- und Druckzylinder bei dem Betrieb einer Ballenformeinrichtung auf unterschiedlichen Seiten eines Hebelarms angeordnet werden und so in identischer Richtung eine Kraft erzeugen. Ändert sich zum Beispiel aufgrund eines wachsenden Erntegutballens die Lage einer mit direkt gekoppelt angesteuerten Zylindern betriebenen Ballenformeinrichtung, so wird diese nach außen gedrückt und auf die Zylinder Druck ausgeübt. Dadurch wird eine Teilmenge eines Fluids aus beispielsweise den auf Seiten der Zylinderkolbenstange angeschlossenen Zylindern verdrängt und zum Teil von den auf der Zylinderkopfseite angeschlossenen Zylindern aufgenommen. Damit werden aufgrund der nun kleineren Menge Fluid, die im Rest des System strömt, kleiner ausgelegte Leitungen als im Stand der Technik benötigt. Alternativ können die zu transportierenden Fluidmengen schneller im System bewegt werden, was die gattungsgemäße Maschine weiter verbessert. Des weiteren wird der bauliche Aufwand für die Druckleitungen verringert, da die untereinander gekoppelten Zylinder zusammen beispielsweise nur an eine einzige Leitung anschließbar sind.

Der Fluidkreislauf mit den Zylindern kann vorteilhafterweise auch dergestalt ausgebildet sein, dass die von einem Teil der Zylinder abgegebene Menge Fluid komplett von einem anderen Teil der Zylinder aufgenommen wird, so dass sich der bauliche Aufwand weiter verringert. Entsprechend müssen weniger Leitungen an dem Gehäuse einer erfindungsgemäßen Maschine angebracht werden, was Störanfälligkeit und Kosten reduziert.

Weitere Vorteile und Einzelheiten ergeben sich aus den Unteransprüchen sowie den nachfolgend beschriebenen schematischen Zeichnungen einer erfindungsgemäßen Maschine. In den Zeichnungen zeigt:
- Figur 1:: eine erfindungsgemäße Maschine mit einer von Zylindern kraftbeaufschlagbaren Ballenformeinrichtung,
- Figur 2:: eine mit Zylindern versehene Baugruppe in einer ersten Position,
- Figur 3:: den Gegenstand nach Figur 2 in einer weiteren Position,
- Figur 4:: einen Schaltplan zum Betrieb des in den Figuren 2 und 3 dargestellten Maschinenaggregates.

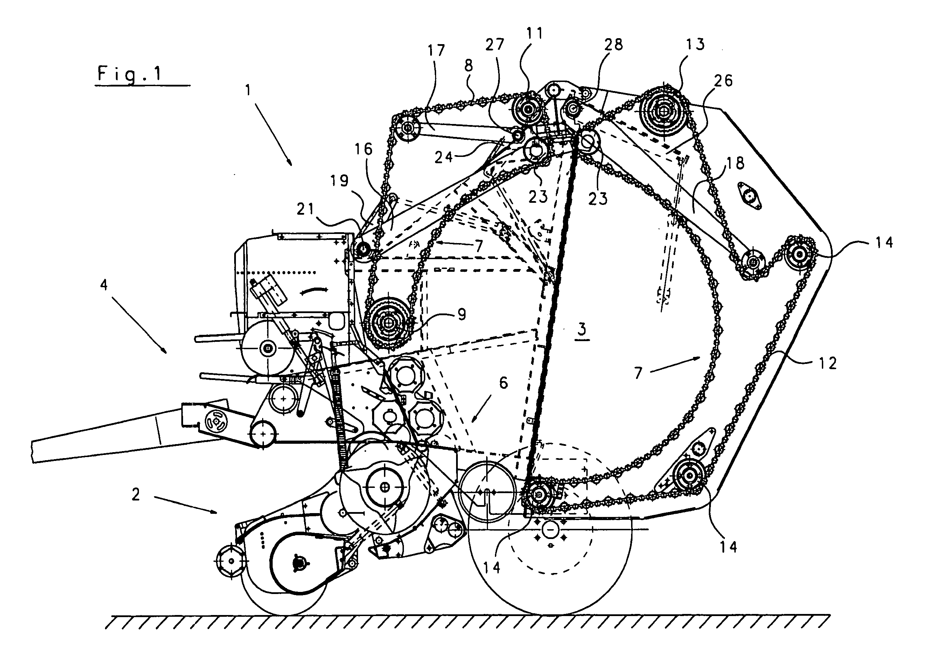

In der Figur 1 ist eine erfindungsgemäße Maschine 1 zum Aufnehmen und Pressen von landwirtschaftlichem Erntegut zu rollenförmigen Ballen dargestellt. Für die Erstellung eines hier nicht näher dargestellten Erntegutballens ist eine Mehrzahl von Maschinenaggregaten vorgesehen. Eine Aufnahmevorrichtung 2 sammelt Erntegut vom Boden auf und leitet es in eine Wickelkammer 3 weiter. Ein Antriebs- und Steuerungsaggregat 4 bietet Kopplungsmöglichkeiten für eine vom Schlepperfahrzeug aus betriebene Antriebswelle.

In der Wickelkammer 3 wird der Erntegutballen dadurch geformt, dass durch die Einlassöffnung 6 in die Wickelkammer 3 transportiertes Erntegut mit Hilfe einer Ballenformeinrichtung 7 in Rotation versetzt wird und sich das neu hinzugekommene Material entsprechend an den Mantelflächen des sich bildenden Erntegutballens anlagert. Die in Figur 1 dargestellte Ballenformeinrichtung 7 ist in zwei endlos umlaufende Abschnitte 8, 12 eingeteilt. Der vordere Abschnitt 8 wird von einer Antriebsrolle 9 angetrieben und läuft zusätzlich zu dieser gehäusefesten Antriebsrolle 9 über eine weitere gehäusefeste Umlenkung 11. In ähnlicher Art und Weise ist der hintere Abschnitt 12 von einer Antriebsrolle 13 angetrieben und läuft ebenfalls über gehäusefeste Umlenkungen 14.

Um eine Anlage der inneren Abschnitte 8, 12 der Ballenformeinrichtung an dem sich bildenden Erntegutballen, beispielsweise einem Heuballen zu gewährleisten, bilden mehrere Spannarme 16, 17, 18 die Ballenformeinrichtung 7 flexibel anpassbar und an den Erntegutballen anpressbar aus.

Der Spannarm 16 ist mit einem Hebelarm 19 drehfest verbunden und um eine Achse 21 verschwenkbar. Am Ende des Spannarms 16 befinden sich zwei Umlenkungen 23, die dicht beieinander liegen und somit eine gemeinsame Führung der beiden Abschnitte 8 und 12 gewährleisten.

Der mittlere Spannarm 17 und der hintere Spannarm 18 befinden sich in Eingriff mit den Leertrums der Abschnitte 8, 12 und werden um Schwenkachsen 27 bzw. 28 geschwenkt, wobei sich die Leertrums von den an dem Ballen anliegenden Teilen der Abschnitte 8, 12 lediglich aufgrund der an letzteren anliegenden und auf den Ballen wirkenden Antriebsmomente unterscheiden.

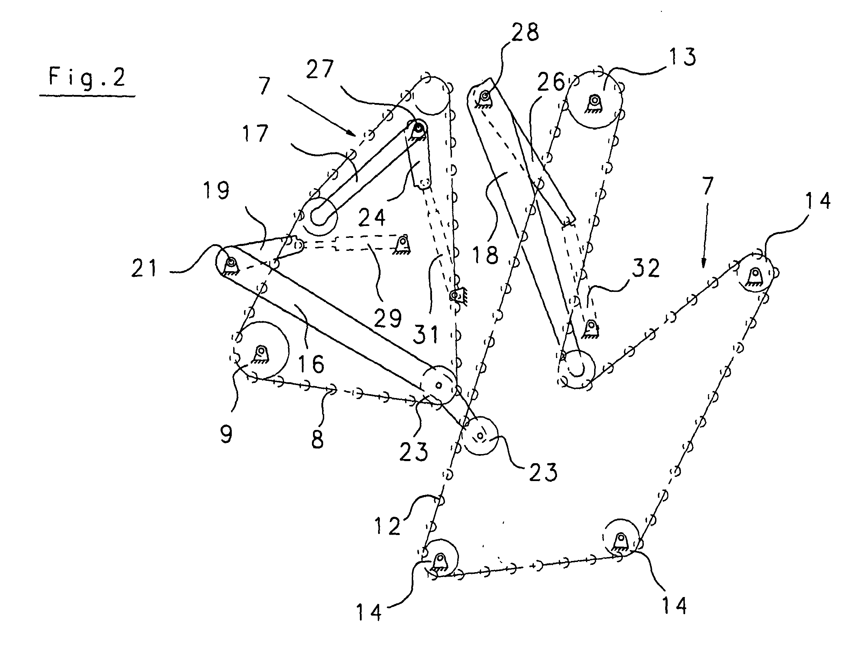

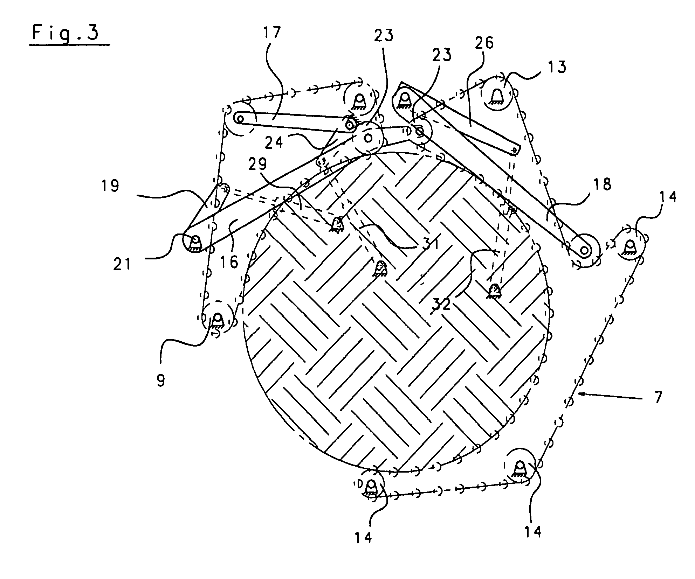

Die Ballenformeinrichtung 7 befindet sich während der Ballenbildung ständig in Anlage mit dem sich bildenden Erntegutballen und bringt den für eine Verdichtung des Erntegutballens notwendigen Pressdruck auf, wobei die Spannarme 16, 17, 18 mit der Ballenformeinrichtung 7 aus der in Figur 2 gezeigten Ausgangspositionen in die in Figur 3 gezeichnete Endposition verschwenken. Diese Endposition ist abhängig vom jeweiligen Erntegutballendurchmesser und ist variabel einstellbar. Ersichtlich zeigt die in Figur 3 abgebildete Anordnung der Spannarme 16, 17, 18 mit den jeweiligen Abschnitten 8, 12 eine Endposition, die einem Maximaldurchmesser eines Erntegutballens entspricht.

Die mit den Hebelarmen 19, 24, 26 der Spannarme 16, 17, 18 verbundenen Zylinder 29, 31 und 32 müssen zum einen die bei größer werdendem Erntegutballen benötigte Länge der Ballenformeinrichtung 7 freigeben, zum anderen aber den für eine übliche Pressdichte des Erntegutballens notwendigen Druck der Ballenformeinrichtung 7 auf den Erntegutballen gewährleisten. Der Zylinder 29 ist daher als Zugzylinder ausgebildet, um eine Presskraft in Richtung des Ballens auszuüben. Im Gegensatz dazu ist der Zylinder 31 als Druckzylinder ausgebildet, da er den vorderen Abschnitt 8 der Ballenformeinrichtung 7 unter Spannung halten muss. Der mit der gleichen Aufgabe betraute Zylinder 32 muss ebenfalls eine Spannkraft der Ballenformeinrichtung 7 gewährleisten und ist aufgrund seiner den Abschnitt 12 von außen einstülpenden Funktion ebenfalls als Zugzylinder ausgebildet.

Mit wachsendem Ballen fährt Zylinder 29, der auf der Kolbenstangenseite angesteuert ist, aus und gibt entsprechend der Verstellung des Kolbens eine bestimmte Menge Fluid ab. Ebenso fährt mit größer werdendem Erntegutballen der Zylinder 32 aus, der ebenfalls auf der Kolbenstangenseite mit einem Druckleitungsanschluss versehen ist, und gibt entsprechend Fluid ab. Die von den beiden Zylindern 29 und 32 abgegebene Menge Fluid wird bei diesem Ausführungsbeispiel zumindest teilweise von dem Zylinder 31 aufgenommen, der für die Spannung des vorderen Wickelbodenabschnitts 8 zuständig ist und ebenfalls ausfahren muss. So ergibt sich nach und nach der in Figur 3 dargestellte Extremzustand mit einem maximal großen Erntegutballen.

Es ist offensichtlich, dass je nach Ansteuerung der Hebelarme 19, 24 und 26 die Zylinder 29, 31, 32 auch anders angeordnet und/oder druckbeaufschlagt werden können. Wichtig ist hierbei lediglich, dass ein Teil bzw. eine Anzahl der Zylinder 29, 31, 32 zumindest teilweise die Menge Fluid eines anderen Teils / einer anderen Anzahl der Zylinder aufnimmt.

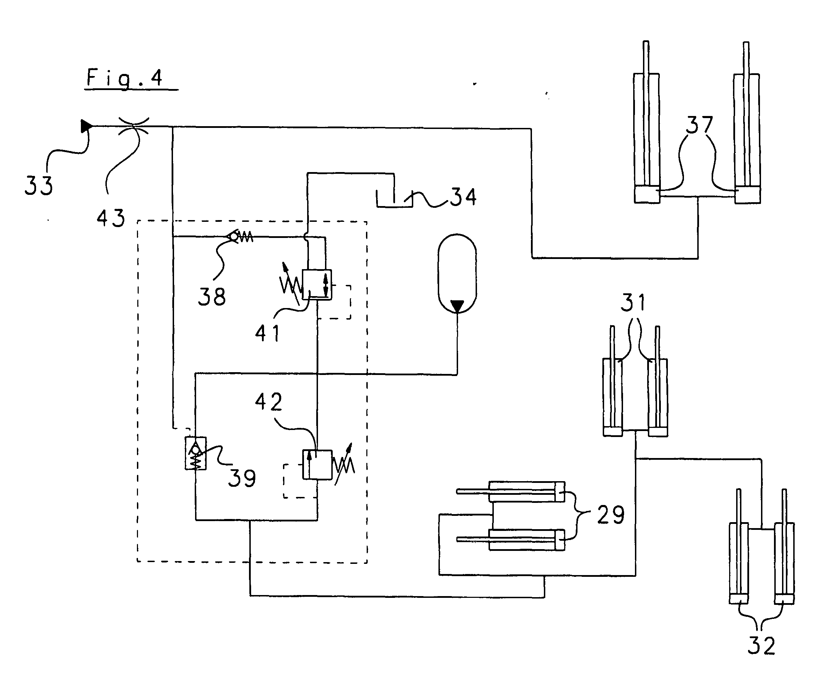

Der in Figur 4 dargestellte Schaltplan verdeutlicht die Ansteuerung der jeweiligen Zylinder 29, 31, 32. Da in Fahrtrichtung links und rechts des Erntegutballens jeweils identische Anordnungen von Zylindern 29, 31, 32 vorgesehen sind, werden diese auch gleichzeitig angesteuert und sind in der Figur 4 als Zylinderpaare dargestellt. Ersichtlich handelt es sich bei den Zylindern 29 um Zugzylinder, dass heißt sie fahren bei Zuführung von Fluid ein, bei den Zylindern 31 um Druckzylinder, die bei Zuführung von Fluid ausfahren, und bei den Zylindern 32 wiederum um Zugzylinder. Neben einem Druckanschluss 33 ist ein freier Rücklauf 34 sowie eine Ventilanordnung zur Steuerung der Zylinder 29, 31, 32 gezeigt. Die beiden ebenfalls dargestellten Zylinder 37 dienen der Öffnung des Maschinengehäuses beim Entladen eines fertigen Erntegutballens.

Beim Öffnen der Heckklappe, die der Betätigung der Zylinder 37 entspricht, wird gleichzeitig durch den dann am Eingang 33 anliegenden Systemdruck das entsperrbare Rückschlagventil 39 geöffnet. Hierdurch kann das Druckbegrenzungsventil 42 umgangen werden und der Druck in den Spannzylindern 29, 31, 32 sinkt auf das am Druckregelventil 41 einstellbare Druckniveau für den schlupffreien Weiterbetrieb der Ballenformeinrichtung 7, beispielsweise auf 20 oder 30 bar. Nachdem der Ballen ausgeworfen wurde, befinden sich die Zylinder 29, 31 und 32 in einer Zwischenstellung, die hier nicht gezeigt ist.

Zum Schließen der Heckklappe wird der Druckanschluss 33 drucklos geschaltet und die Zylinder 37 geben ein Fluidvolumen ab, welches wegen der Drosselung 43, welche einen Staudruck erzeugt, zumindest teilweise in den Rest des Systems zurück fließt. Damit werden die Zylinder 29, 31 und 32 wieder in ihre Ausgangsposition gebracht. Gleichzeitig ist auch das Rückschlagventil 39 wieder gesperrt, so dass bei einem wachsenden Erntegutballen im wesentlichen sofort wieder der notwendige Pressdruck von der Ballenformeinrichtung ausgeübt werden kann. Der insgesamt auf den Erntegutballen wirkende Pressdruck wird durch das Druckregelventil 41 und das Druckbegrenzungsventil 42 eingestellt, wobei wie bereits erwähnt das Druckregelventil 41 den Restdruck im System während des Öffnens der Maschine 1 zum Auswerfen eines Erntegutballens regelt und das Druckbegrenzungsventil 42 auf die Differenz zwischen dem Restdruck zur Vermeidung von Schlupf zwischen Antriebstollen und Ballenformeinrichtung 7 während des Öffnens und dem gewünschten Pressdruck eingestellt ist.

## Patentansprüche

1. Maschine zum Aufnehmen und Pressen von landwirtschaftlichem Erntegut, wie Heu, Stroh, Gras oder dgl., zu rollenförmigen Ballen, mit einem als Wickelkammer (3) mit Ballenformeinrichtung (7) ausgebildeten Maschinenaggregat, das zumindest einen schwenkbaren, über die Ballenformeinrichtung (7) auf einen Emtegutballen Druck ausübenden Spannarm (16,17,18) aufweist und mit einer Mehrzahl von mit einem Fluid befüllbaren Zylindern (29, 31, 32) versehen ist, **dadurch gekennzeichnet, dass** im Betrieb eine erste Anzahl der Zylinder (29, 31, 32) eine Menge Fluid aufnimmt, die der von einer zweiten Anzahl der Zylinder (29, 31, 32) abgegebenen Menge Fluid im Sinne eines Medienaustausches zumindest teilweise entspricht.

2. Maschine nach Anspruch 1, **dadurch gekennzeichnet, dass** die Zylinder (29, 31, 32) Hydraulikzylinder (29, 31, 32) sind.

3. Maschine nach einem der Ansprüche 1 oder 2, **gekennzeichnet durch** zumindest ein, einer zum Betrieb der Zylinder (29, 31, 32) vorgesehenen Steuervorrichtung zugehöriges Druckregelventil (41), welches den an den Zylindern (29, 31, 32) anliegenden Druck auf ein regelbares Maximum begrenzt.

4. Maschine nach Anspruch 3, **dadurch gekennzeichnet, dass** über das Druckregelventil (41) bei vollem Druckspeicher (36) eine Verbindung zu einem Rücklauf (34) vorgesehen ist.

5. Maschine nach einem der Ansprüche 1 bis 4, **gekennzeichnet, durch** einen Druckanschluss (33) für eine externe Fluidquelle.

## Claims

1. Machine for picking up agricultural crops for harvesting such as hay, straw, grass or the like and for pressing them into bales in roll form, having a machine sub-unit in the form of a winding chamber (3) having a bale-forming means (7), which machine sub-unit has at least one pivotable clamping arm (16, 17, 18) which, via the bale-forming means (7), exerts pressure on a bale of harvested crop and which is provided with a plurality of cylinders (29, 31, 32) able to be filled with a fluid, **characterised in that**, in operation, a first number of the cylinders (29, 31, 32) receive a quantity of fluid which, in the form of an exchange of medium, at least partly corresponds to the quantity of fluid discharged from a second number of the cylinders (29, 31, 32).

2. Machine according to claim 1, **characterised in that** the cylinders (29, 31, 32) are hydraulic cylinders (29, 31, 32).

3. Machine according to either of claims 1 and 2, **characterised by** at least one pressure-regulating valve (41) which is associated with a control arrangement provided for the operation of the cylinders (29, 31, 32) and which limits the pressure applied to the cylinders (29, 31, 32) to a regulatable maximum.

4. Machine according to claim 3, **characterised in that**, when a pressure reservoir (36) is full, a connection is provided to a return (34) via the pressure-regulating valve (41).

5. Machine according to one of claims 1 to 4, **characterised by** a pressure-carrying connection (33) for an external source of fluid.

## Revendications

1. Machine pour ramasser et compacter des produits agricoles récoltés tels que de la paille, du foin, de l'herbe ou analogues, pour réaliser des balles en forme de rouleaux, comportant une chambre d'enroulement (3) munie d'une installation de formage de balles (7) constituant l'équipement de la machine, ayant au moins un bras de tension (16, 17, 18) pivotant, exerçant une pression par l'installation de formation de balle (7) sur la balle de produits récoltés, ainsi qu'un ensemble de vérins (29, 31, 32) recevant un fluide,
**caractérisée en ce qu'**
en fonctionnement, un premier nombre de vérins (29, 31, 32) de l'ensemble reçoit du fluide fourni par un second nombre de vérins (29, 31, 32) fournissant le fluide dans un sens qui correspond au moins en partie à un échange de fluide.

2. Machine selon la revendication 1,
**caractérisée en ce que**
les vérins (29, 31, 32) sont des vérins hydrauliques (29, 31, 32).

3. Machine selon l'une des revendications 1 ou 2,
**caractérisée en ce qu'**
au moins une vanne de régulation de pression (41) correspondant à un dispositif de commande pour le fonctionnement des vérins (29, 31, 32) limite à un maximum réglable, la pression appliquée aux vérins (29, 31, 32).

4. Machine selon la revendication 3,
**caractérisée par**
une liaison vers un retour (34) par la vanne de régulation de pression (41) lorsque l'accumulateur de pression (36) est plein.

5. Machine selon l'une des revendications 1 à 4,
**caractérisée par**
un branchement de pression (33) pour une source externe de fluide.
